# EUROPÄISCHE PATENTSCHRIFT

(11) **EP 1 764 136 B1**
(45) Veröffentlichungstag und Bekanntmachung des Hinweises auf die Patenterteilung: **21.01.2009**
(21) Anmeldenummer: 06014817.8
(22) Anmeldetag: 17.07.2006
(51) Int. Cl.: A62D 5/00, B01D 39/08, B01J 20/28

(54) **Mit wirkstoffhaltigen Mikrokapseln beaufschlagtes funktionelles Textilmaterial und seine Verwendung**
functional textile fabric provided with active microcapsules and its use
tissu fonctionnel ayant des microcapsules contenant des principes actifs et son usage

(30) Priorität: 16.09.2005 DE 102005044504
(43) Veröffentlichungstag der Anmeldung: 21.03.2007
(60) Teilanmeldung: 07018470.0
(73) Patentinhaber: Blücher GmbH, 40699 Erkrath (DE)
(72) Erfinder: Böhringer, Bertram Dr., 42115 Wuppertal (DE); Klemund, Michael, 40239 Düsseldorf (DE)
(74) Vertreter: Gesthuysen, von Rohr & Eggert

(56) Entgegenhaltungen:
- EP-A- 1 279 435
- EP-A1- 0 818 230
- DE-A1- 4 205 648
- DE-A1- 10 261 996
- DE-A1- 19 850 997
- DE-C1- 4 206 443
- US-A- 5 277 963
- US-A- 5 605 746

## Beschreibung

Die vorliegende Erfindung betrifft ein mit wirkstoffhaltigen Mikrokapseln beaufschlagtes funktionelles Textilmaterial nach dem Oberbegriff des Anspruchs 1, sowie dessen Verwendung zur Herstellung von Bekleidung sowie von Schutzmaterialien aller Art und darüber hinaus zur Herstellung von Filtern und Filtermaterialien aller Art. Weiterhin betrifft die vorliegende Erfmdung Bekleidung und Schutzmaterialien sowie Filter und Filtermaterialien, welche unter Verwendung des vorgenannten funktionellen Textilmaterials hergestellt sind.

Wirkstoffe aller Art lassen sich heutzutage auch in Textilien einarbeiten. Dies kann beispielsweise dadurch geschehen, daß die entsprechenden Wirkstoffe in die Fasern eingesponnen werden. Auf diese Weise wird aber eine nur oftmals unzureichende Wirkstoffkonzentration erreicht. Zudem ist eine kontrollierte Freisetzung nicht immer gewährleistet.

Darüber hinaus lassen sich Wirkstoffe alternativ auch in sogenannte Mikrokapseln einbringen; Ziel der Verkapselung ist es, die Wirkstoffe fest einzuschließen, so daß sich örtlich gezielt eine bestimmte Dosierung erreichen läßt. Grundsätzlich gibt es zwei verschiedene Arten von Mikrokapseln zu diesem Zweck, nämlich Matrixverkapselungen einerseits und Kern/Hülle-Verkapselungen andererseits. Um die Wirkstoffe zielgerichtet zur Entfaltung zu bringen, müssen die Mikrokapseln auf die Textilien aufgebracht werden. Realisiert wird dies heute oftmals dadurch, daß die Mikrokapseln in komplexe Verbundmaterialien eingelagert werden, die dann Bestandteil der Textilien werden. Alternativ werden die Mikrokapseln oft in Beschichtungen, insbesondere Polyurethan-Beschichtungen eingebracht, welche dann vollflächig auf die Textilien aufgebracht werden, so daß die Textilien hierdurch zumindest einen Teil ihrer Luftdurchlässigkeit verlieren und die Wirkstofffreisetzung nicht immer kontrolliert erfolgen kann.

Daher hat es nicht an Versuchen gefehlt, Textilmaterialien mit Wirkstoffen zu versehen, welche kontrolliert zu einem gewünschten Zeitpunkt freigesetzt werden bzw. zu einem gewünschten Zeitpunkt ihre Wirkung entfalten. Dieses Problem ist im Stand der Technik bislang nicht zufriedenstellend gelöst worden.

Die US 2003/0054141 A1 betrifft einen beschichteten Gegenstand mit reversiblen thermischen Eigenschaften mit einem eine Oberfläche aufweisenden Substrat und einer Beschichtung, welche einen Teil der Oberfläche bedeckt und ein Polymermaterial und ein temperaturregulierendes Material umfaßt, welches in dem Polymermaterial dispergiert ist, wobei die Beschichtung aus einer Vielzahl von diskontinuierlichen Bereichen gebildet ist, welche voneinander getrennt sind und einen verbleibenden Teil der Oberfläche zur Bereitstellung einer mitunter verbesserten Flexibilität und Luftdurchlässigkeit des beschichteten Gegenstandes freigeben. Die Materialien mit temperaturregulierenden Eigenschaften sind in dem zur Beschichtung verwendeten Polymermaterial dispergiert bzw, verteilt und sind somit in das Polymermaterial eingelagert, d. h. es wird eine Mischung aus dem Material mit thermoregulativen Eigenschaften einerseits und dem Polymermaterial andererseits auf das Substrat aufgetragen.

Weiterhin betrifft die WO 2005/018795 A1 Mikrokapseln, die auf Fasern aufgebracht werden, um eine langsame Freisetzung von Produkten, wie Duftstoffen, antimikrobiellen Substanzen, Insektiziden, Antioxidantien, Vitaminen etc., zu ermöglichen. Die Mikrokapseln sollen zudem in Form von Materialien, wie etwa thermochrome Pigmenten, welche bei Erwärmung ihre Farbe verändern, oder als Phasenumwandlungsmaterialien ("*phase change materials",* PCM), welche eine thermische Isolierung/Steuerung übermitteln, verwendet werden können. Die Mikrokapseln sind aus zwei Polymerwänden zusammengesetzt, wobei die Außenwand für eine thermische Fusion auf ein Textilsubstrat thermoplastisch sein soll. Die dort beschriebenen doppelwandigen Mikrokapseln werden durch Erwärmen der thermoplastischen Außenhülle, also durch eine wärmeinduzierte Eigenklebrigkeit, mit dem Trägermaterial verbunden.

Die WO 00/05970 A1 betrifft beschichtete Mikrokapseln mit einem nichtfreigesetzten Material, welches in einer polymeren Hülle eingekapselt ist. Die Mikrokapseln weisen eine kontinuierliche Metalloxidgelbeschichtung auf. Die Mikrokapseln können Phasenumwandlungsmaterialien zur Bereitstellung thermischer Eigenschaften aufweisen. Die Mikrokapseln werden in Schaumstrukturen inkorporiert und hierin eingebettet.

Schließlich betrifft die WO 93/24241 betrifft ein Gewebe mit reversiblen thermischen Eigenschaften und insbesondere eine Beschichtung mit einem Bindemittel und einer Vielzahl von im gesamten Bindemittel dispergierten, leckresistenten, ein Temperaturstabilisierungsmittel enthaltenden Mikrokapseln. Die Mikrokapseln können mit einem Phasenumwandlungsmaterial oder mit Kunststoffkristallen mit spezifischen thermischen Eigenschaften bei bestimmten Temperaturen gefüllt sein. Die Mikrokapseln werden in eine Trägermatrix in Form eines Bindemittels eingelagert und sind vollständig von der Trägermatrix umgeben. Zu diesem Zweck wird das Bindemittel mit den Mikrokapseln vollflächig auf das Trägermaterial aufgetragen.

Es ist daher die Aufgabe der vorliegenden Erfindung, ein funktionelles Textilmaterial bereitzustellen, welches die zuvor geschilderten Nachteile des Standes der Technik zumindest weitgehend vermeidet oder aber zumindest abschwächt. Insbesondere sollte sich ein solches Textilmaterial zu einer vielseitigen Verwendbarkeit eignen, insbesondere zur Herstellung von Bekleidung und von Schutzmaterialien aller Art sowie von Filtern und Filtermaterialien aller Art.

Insbesondere liegt eine Aufgabe der vorliegenden Erfindung darin, ein mit wirkstoffhaltigen Mikrokapseln beaufschlagtes funktionelles Textilmaterial bereitzustellen, welches einerseits über eine gute Atmungsaktivität, insbesondere eine gute Gas- und/oder Wasserdampfdurchlässigkeit, verfügt und andererseits die Wirkstoffe an gewünschtem Ort und/oder zu einem gewünschten Zeitpunkt zur Entfaltung bringen bzw. freizusetzen kann.

Zur Lösung der zuvor geschilderten Aufgabenstellung schlägt die vorliegende Erfindung ein funktionelles Textilmaterial gemäß Anspruch 1. Weitere, vorteilhafte Ausgestaltungen des erfindungsgemäßen funktionellenTextilmaterials sind Gegenstand der Unteransprüche.

Weiterer Gegenstand der vorliegenden Erfindung ist die Verwendung des funktionellen Textilmaterials nach der vorliegenden Erfindung, insbesondere zur Herstellung von Bekleidung sowie Schutzmaterialien aller Art und von Filtern sowie Filtermaterialien aller Art.

Schließlich sind ein weiterer Gegenstand der vorliegenden Erfindung die mit dem erfindungsgemäßen funktionellen Textilmaterial hergestellten Bekleidungsstücke und Schutzmaterialien sowie Filter und Filtermaterialien.

Gegenstand der vorliegenden Erfindung - gemäß einem ersten Aspekt der vorliegenden Erfindung - ist somit ein funktionelles Textilmaterial, wobei das funktionelle Textilmaterial einen textilen Träger umfaßt, wobei der textile Träger mit Mikrokapseln beaufschlagt ist, wobei die Mikrokapseln mindestens einen Wirkstoff enthalten, wobei die Mikrokapseln mittels eines diskontinuierlich auf dem textilen Träger applizierten Klebstoffs an dem textilen Träger befestigt sind, wobei die Mikrokapseln als Wirkstoff ein Phasenumwandlungsmaterial (Phase-Change-Material) enthalten, wobei das Phasenumwandlungsmaterial ein Material mit fest/flüssig- oder flüssig/fest-Phasenübergang ist und wobei das Phasenumwandlungsmaterial beim Phasenübergang Wärme oder Kälte generiert, wobei das funktionelle Textilmaterial dadurch gekennzeichnet ist
- daß die Verklebung der Mikrokapseln mit dem textilen Träger durch einen diskontinuierlichen Klebstoffauftrag in Form von nichtzusammenhängenden, räumlich voneinander beabstandeten Kleberpunkten erfolgt, wobei der Abstand der einzelnen Kleberpunkte voneinander höchstens dem 20fachen des Durchmessers der Kleberpunkte entspricht und der Durchmesser der Kleberpunkte höchstens dem 20 fachen des Durchmessers der Mikrokapseln entspricht, sofern der Durchmesser der Mikrokapseln mindestens 50 µm beträgt, und wobei der Klebstoff den textilen Träger insgesamt zu höchstens 30 % bedeckt,
- daß die Verklebung der Mikrokapseln mit dem textilen Träger mittels des Klebstoffs erfolgt derart, daß mindestens 50 % der Oberfläche der Mikrokapseln nicht mit Klebstoff bedeckt ist, und
- daß der textile Träger außerdem ein chemische Gifte adsorbierendes Adsorbens auf Basis von Aktivkohle in Form von Aktivkohleteilchen und/oder Aktivkohlefasern umfaßt, wobei das Adsorbens an dem textilen Träger mittels Verkleben befestigt ist.

Denn die Anmelderin hat überraschenderweise herausgefunden, daß sich ein hochflexibles, mechanisch stabiles, atmungsaktives, insbesondere gas- und/ oder wasserdampfdurchlässiges funktionelles Textilmaterial herstellen läßt, indem die wirkstoffhaltigen Mikrokapseln über einen nur diskontinuierlich auf dem textilen Träger applizierten Klebstoff mit dem textilen Träger des funktionellen Textilmaterials verbunden sind. Auf diese Weise gelingt es nicht nur, ein sehr gasdurchlässiges, insbesondere luftdurchlässiges, und/oder wasserdampfdurchlässiges, also insgesamt sehr atmungsaktives funktionelles Textilmaterial mit hoher mechanischer Belastbarkeit bereitzustellen, sondern man erhält aufgrund des nur diskontinuierlichen Klebstoffauftrags auch ein deutlich reduziertes Flächengewicht und eine deutlich erhöhte Flexibilität bzw. einen deutlich erhöhten Tragekomfort bei der Verarbeitung zu Bekleidungsstücken. Durch den diskontinuierlichen Klebstoffauftrag wird zudem nur ein geringer Teil der Oberfläche der Mikrokapseln belegt, so daß der überwiegende Teil der Oberfläche der Mikrokapseln für die Freisetzung bzw. Entfaltung der Wirkstoffe frei zugänglich (d. h. nicht mit Klebstoff belegt) ist, so daß aufgrund des diskontinuierlichen Klebstoffauftrags auch die Wirkstoffeffizienz deutlich erhöht ist.

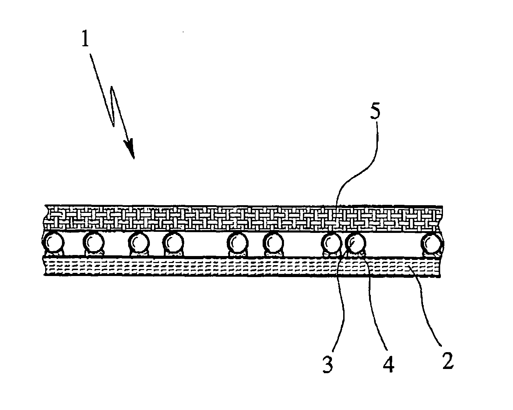

Weitere Vorteile, Eigenschaften, Aspekte und Merkmale der vorliegenden Erfindung ergeben sich aus der folgenden Beschreibung eines in der Zeichnung dargestellten bevorzugten Ausführungsbeispiels.

Die einzige Figur zeigt eine schematische Schnittdarstellung durch den Schichtaufbau eines funktionellen Textilmaterials gemäß einem bevorzugten Ausführungsbeispiel der vorliegenden Erfindung.

Die einzige Figur zeigt ein erfindungsgemäßes funktionelles Textilmaterial 1, wobei das funktionelle Textilmaterial 1 einen textilen Träger 2 umfaßt, Der textile Träger 2 ist mit Mikrokapseln 3, welche mindestens einen Wirkstoff enthalten, beaufschlagt. Erfindungsgemäß erfolgt die Befestigung der wirkstoffhaltigen Mikrokapseln 3 an dem textilen Träger 2 mittels eines diskontinuierlich auf dem textilen Träger 2 applizierten Klebstoffs 4. Eine Besonderheit der vorliegenden Erfindung ist insbesondere darin zu sehen, daß die Verklebung der Mikrokapseln 3 mit dem textilen Träger 2 des funktionellen Textilmaterials 1 durch einen nur diskontinuierlichen Klebstoffauftrag, insbesondere in Form von einzelnen, nichtzusammenhängenden (d. h. also räumlich getrennt voneinander vorliegenden bzw, nicht miteinander verbundenen) Kleberpunkten, erfolgt. Die mit dem diskontinuierlichen Klebstoffauftrag verbundenen Vorteile wurden zuvor bereits geschildert.

Um einerseits eine gute Gas- und/oder Wasserdampfdurchlässigkeit und andererseits eine gute Flexibilität des erfindungsgemäßen funktionellen Textilmaterials 1 - bei gleichzeitig guter Haftung der Mikrokapseln 3 an dem textilen Träger 2 - zu gewährleisten, wird der Klebstoff 4 - wie zuvor beschrieben - diskontinuierlich auf dem textilen Träger 2 appliziert, nämlich in Form von nichtzusammenhängenden, räumlich voneinander beabstandeten Kleberpunkten 4. Der Begriff der Kleberpunkte bezeichnet dabei insbesondere sehr kleine Klebstofftröpfen oder -häufchen, die auf den textilen Träger 2 aufgebracht sind, und zwar im allgemeinen ohne einander zu berühren; es entstehen typischerweise annähernd runde oder ovale Klebstoffstellen mit sehr geringer zweidimensionaler Ausdehnung, weshalb der Begriff der Kleberpunkte verwendet wird.

Sofern der Durchmesser der Mikrokapseln 3 mindestens 50 µm beträgt, beträgt der Durchmesser der Kleberpunkte 4 höchstens das 20fache, insbesondere höchstens das 10fache des Durchmessers der Mikrokapseln 3

Im Falle nicht vollständig runder bzw. unregelmäßig geformter Kleberpunkte bezeichnet der Begriff des Durchmessers die maximale Flächenerstreckung des betreffenden Kleberpunkts in der Projektionsebene. Die aufgetragenen Kleberpunkte können dabei grundsätzlich gleich groß oder unterschiedlich groß sein; vorteilhafterweise werden gleich große Kleberpunkte aufgetragen. Im Falle unterschiedlich großer Klebepunkte beziehen sich die vorgenannten Dimensionsangaben in bezug auf den Kleberpunkteabstand und den Durchmesser der Klebepunkte auf die jeweils größten Durchmesser.

Erfindungsgemäß wird der Klebstoff 4 in einer solchen Menge aufgetragen, daß er den textilen Träger 2 insgesamt zu höchstens 30 %, insbesondere zu höchstens 25 %, vorzugsweise zu höchstens 20 %, ganz besonders bevorzugt zu höchstens 15 %, bedeckt. Im allgemeinen bedeckt der Klebstoff 4 den textilen Träger 2 insgesamt zu 5 bis 30 %, insbesondere 10 bis 25 %, vorzugsweise 10 bis 20 %.

Im allgemeinen kann der Klebstoff 4 mit einem Flächengewicht (Trockengewicht) von 5 bis 30 g/m², insbesondere 5 bis 25 g/m², vorzugsweise 10 bis 20 g/m², auf den textilen Träger 2 aufgetragen sein.

Gemäß einer bevorzugten Ausführungsform ist der Klebstoff 4 auf den textilen Träger 2 aufgedruckt. Die Bedruckung des textilen Trägers 2 mit dem Klebstoff 4 kann beispielsweise in Form eines regelmäßigen Rasters oder Musters erfolgen. Alternativ kann die Bedruckung des textilen Trägers 2 mit dem Klebstoff 4 aber auch in Form eines unregelmäßigen, insbesondere computerberechneten Rasters oder Musters erfolgt sein; dabei sollte die Bedruckung des unregelmäßigen Rasters oder Musters derart sein, daß im Gebrauchszustand des funktionellen Textilmaterials 1 eine Gassenbildung, insbesondere ein sogenannter Moire-Effekt, vermieden wird. Im allgemeinen können derartige unregelmäßige Raster bzw, Muster für den Klebstoffauftrag computerunterstützt bzw. computergesteuert berechnet und aufgetragen werden (sogenanntes CP-Klebstoffraster bzw. Computer-Point-Klebstoffraster). Dies ist dem Fachmann an sich bekannt.

Die Bedruckung des textilen Trägers 2 mit dem Klebstoff 4 kann beispielsweise mittels einer Schablone erfolgen, Vorteilhafterweise beträgt der lichte Durchmesser der Schablone bzw. genauer gesagt der Löcher der Schablone, durch welche der Klebstoffauftrag erfolgt, 50 bis 1.000 µm, insbesondere 100 bis 575 µm, vorzugsweise 100 bis 300 µm.

Was den Klebstoff 4 als solchen anbelangt, so kommen alle dem Fachmann an sich bekannten, für diese Zwecke verwendbaren Klebstoffe in Betracht. Besonders geeignet sind Schmelzklebstoffe (sogenannte Hotmelts), insbesondere reaktive oder nichtreaktive Schmelzklebstoffe, oder aber thermoplastische Klebstoffe.

Was den textilen Träger 2 des funktionellen Textilmaterials 1 nach der vorliegenden Erfindung anbelangt, so ist dieser im allgemeinen flächig ausgebildet, d. h. der textile Träger 2 ist im allgemeinen ein textiles Flächengebilde. Insbesondere ist der textile Träger 2 ein Gewebe, Gewirke, Gestricke, Gelege, Textilverbundstoff, Vlies oder Nonwoven. Der textile Träger 2 besitzt im allgemeinen ein Flächengewicht von 25 bis 500 g/m², insbesondere 30 bis 250 g/m², vorzugsweise 35 bis 200 g/m².

Je nach Anwendung kann der textile Träger 2 gasdurchlässig, insbesondere luftdurchlässig, und/oder wasserdurchlässig und/oder wasserdampfdurchlässig ausgebildet sein. Alternativ hierzu kann der textile Träger 2 aber auch gasundurchlässig, insbesondere luftundurchlässig, und/oder wasserundurchlässig und/oder wasserdampfundurchlässig ausgebildet sein. Gemäß einer bevorzugten Ausführungsform ist der textile Träger 2 jedoch gasdurchlässig, insbesondere luftdurchlässig, und wasserdurchlässig und wasserdampfdurchlässig ausgebildet.

Was die angesetzten Mikrokapseln 3 anbelangt, so kann deren Durchmesser in weiten Bereichen variieren. Im allgemeinen liegt der Durchmesser der Mikrokapseln 3 im Bereich von 1 µm bis 5 mm, insbesondere 5 µm bis 2 mm, vorzugsweise 10 µm bis 1 mm, besonders bevorzugt 50 µm bis 0,8 mm.

Grundsätzlich können die erfindungsgemäß eingesetzten Mikrokapseln 3 in Form von Matrixkapseln oder aber in Form von Kern/Hülle-Kapseln vorliegen. Von einer Matrixverkapselung spricht man insbesondere dann, wenn der oder die Wirkstoffe über die gesamte Mikrokapsel 3 in vorzugsweise homogener bzw. gleichmäßiger Verteilung vorliegt, wohingegen bei einer Kern/Hülle-Verkapselung der Wirkstoff im Inneren bzw. im Hohlraum einer Kapselhülle befindlich ist.

Das Kapselmaterial der Mikrokapseln 3, insbesondere das Matrixmaterial im Fall von Matrixkapseln oder das Hüllmaterial im Fall von Kem/Hülle-Kapseln, kann beispielsweise auf Basis von organischen Polymeren, organischen-anorganischen Hybridpolymeren oder anorganischen Materialien, insbesondere anorganischen Oxiden, ausgebildet sein. Dies ist dem Fachmann als solches hinlänglich bekannt, so daß auf weitere diesbezügliche Einzelheiten nicht eingegangen zu werden braucht.

Die Fixierung bzw. Befestigung der Mikrokapseln 3 an dem textilen Träger 2 erfolgt derart, daß die Mikrokapseln 3 zu mindestens 50 %, insbesondere zu mindestens 60 %, vorzugsweise zu mindestens 70 %, frei zugänglich sind, d. h. an ihrer Oberfläche nicht von Klebstoff 4 bedeckt sind. Dies ermöglicht eine besonders gute Freisetzung bzw. Wirksamkeit der verkapselten Wirkstoffe.

Die Menge, mit der die Mikrokapseln 3 auf dem textilen Träger 2 aufgetragen sind, kann in weiten Bereichen variieren. Im allgemeinen liegt sie im Bereich von 5 bis 500 g/m², insbesondere 10 bis 400 g/m², vorzugsweise 20 bis 300 g/m², bevorzugt 25 bis 250 g/m², besonders bevorzugt 50 bis 200 g/m². Hierdurch ist gewährleistet, daß einerseits ausreichende Mengen des verkapselten Wirkstoffs vorhanden sind und andererseits das Flächengewicht nicht übermäßig ansteigt.

Die Menge an in den Mikrokapseln 3 enthaltenem Wirkstoff bzw. enthaltenen Wirkstoffen kann gleichermaßen in weiten Bereichen variieren. Im allgemeinen liegt die Wirkstoffmenge im Bereich von 1 bis 99 Gew.-%, insbesondere 5 bis 90 Gew.-%, vorzugsweise 10 bis 80 Gew.-%, besonders bevorzugt 25 bis 75 Gew.-%, bezogen auf die Mikrokapseln 3

Was die in dem Mikrokapseln enthalteren Wirkstoffe anbelangt, so werden im Rahmen der vorliegenden Erfindung Phasenumwandlungsmaterialien (sogenannte "Phase-Change-Materials") eingeseht, was nachfolgend nach im Detail ausgefürt wird.

Gemäß der vorliegenden Erfindung enthalten die Mikrokapseln 3 als Wirkstoff somit ein sogenanntes Phasenumwandlungsmaterial ("Phase-Change-Material"). Unter dem Begriff des Phasenumwandlungsmaterials wird im Sinne der vorliegenden Erfindung ein Material verstanden, welches in der Lage ist, Wärmeenergie in Form von latenter Wärme durch eine Phasenumwandlung, insbesondere eine Aggregatzustandsänderung, zu speichern und/oder wieder freizusetzen, insbesondere auf reversible Art und Weise. Erfindungsgemäß geeignete Phasenumwandlungsmaterialien sind insbesondere ausgewählt aus der Gruppe von Paraffinen, Hydratsalzen und Polyethylenglykolen, vorzugsweise Paraffinen. Beispiele für geeignete Hydratsalze sind z. B. CaCl₂ ·6H₂O sowie Gemische aus Hydratsalzen mit anderen Verbindungen. Insbesondere hängt die Auswahl des oder der verwendeten Phasenumwandlungsmaterialien im allgemeinen von zwei Faktoren ab, nämlich von der latenten Wärme, die durch die Phasenumwandlung gespeichert werden kann, und von der Temperatur der Phasenumwandlung; im allgemeinen gilt, daß - je größer die aufgrund der Phasenumwandlung latente Wärmeenergie ist - desto besser das Phasenumwandlungsmaterial erfindungsgemäß geeignet ist, und zwar aufgrund der Tatsache, daß mehr thermische Energie zur Verfügung steht, die durch das Material gespeichert werden kann. Die Auswahl der Übergangs- oder Phasenumwandlungstemperatur des Phasenumwandlungsmaterials hängt von dem Gebrauchszweck oder der Bestimmung des erfindungsgemäßen funktionellen Textilmaterials 1 ab.

Grundsätzlich können Phasenumwandlungsmaterialien mit einem Phasenübergang fest/flüssig bzw, flüssig/fest - in Abhängigkeit von der Übergangstemperatur, die man zu erhalten wünscht - verwendet werden; des weiteren können in dem erfindungsgemäßen funktionellen Textilmaterial 1 ebenso Gemische von Phasenumwandlungsmaterialien mit unterschiedlichen Übergangstemperaturen verwendet werden. Gemäß der vorliegenden Erfindung wird somit ein Phasenumwandlungsmaterial mit einem fest/flüssig- bzw. flüssig/fest-Phasenübergang eingesetzt. Das Phasenumwandlungsmaterial ist derart ausgewählt, daß es beim Phasenübergang, insbesondere bei einer Aggregatzustandsänderung, Wärme oder Kälte generiert und/oder an die Umgebung abgibt. Dieser Effekt wird dann im Rahmen des funktionellen Textilmaterials 1 genutzt, insbesondere bei dessen Verarbeitung zu Bekleidungsstücken. Aufgrund der Einbringung der Phasenumwandlungsmaterialien in die Mikrokapseln 3 ist der Einsatz der Phasenumwandlungsmaterialien besonders effizient, da diese direkt mit relativ hoher Konzentration in dem funktionellen Textilmaterial 1 integriert sein können, und zwar ohne zusätzliche Barriereschichten, z. B. ohne vollflächige Beschichtungen, durch welche die vom Phasenumwandlungsmaterial beim Phasenübergang freigesetzte Wärme oder Kälte teilweise abgeschirmt oder aufgenommen wird.

Zum Schutz der Mikrokapseln 3 auf dem textilen Träger 2, insbesondere im Benutzungszustand, ist es vorteilhaft, wenn die Mikrokapseln 3 auf ihrer dem textilen Träger 2 abgewandten Seite mit einer textilen Abdeckschicht 5, insbesondere in Form eines textilen Flächengebildes, bedeckt bzw. beaufschlagt sind. Zur Reduktion des Gesamtflächengewichts des funktionellen Textilmaterials 1 weist die Abdeckschicht 5 im allgemeinen ein geringeres Flächengewicht als der textile Träger 2 auf, insbesondere ein Flächengewicht im Bereich von 5 bis 150 g/m², insbesondere 10 bis 125 g/m², vorzugsweise 15 bis 100 g/m², bevorzugt 20 bis 75 g/m². Im allgemeinen ist die Abdeckschicht 5 als ein vorzugsweise luftdurchlässiges textiles Materials, insbesondere als ein textiles Flächengebilde, vorzugsweise als ein Gewebe, Gewirke, Gestricke, Gelege, Textilverbundstoff, Vlies oder Nonwoven, ausgebildet

Da das erfindungsgemäße funktionelle Textilmaterial 1 dazu bestimmt ist, nachfolgend zu Schutzmaterialien, insbesondere für den ABC-Schutz, wie ABC-Schutzanzügen, verarbeitet zu werden, ist es erfindungsgemäß vorgesehen, daß das funktionelle Textilmaterial 1 außerdem ein chemische Gifte adsorbierendes Adsorbens enthält, d.h. der textile Träger 2 zusätzlich mit einem chemische Gifte adsorbierenden Adsorbens beaufschlagt ist (in der Figur nicht dargestellt). Das erfindungsgemäß eingesetzte Adsorbens ist auf Basis von Aktivkohle in Form von Aktivkohleteilchen bzw. Aktivkohlepartikeln und/oder in Form von Aktivkohlefasern ausgebildet. Das Adsorbens ist an dem funktionellen Textilmaterial 1, nämlich an dem textilen Träger 2 mittels Verkleben befestigt. Erfindungsgemäß bevorzugt eingesetzte Aktivkohle weist im allgemeinen eine innere Oberfläche (BET) von mindestens 800 m²/g, insbesondere von mindestens 900 m²/g, vorzugsweise von mindestens 1.000 m²/g, bevorzugt im Bereich von 800 bis 2.500 m²/g, auf. Für den Fall, daß das Adsorbens aus diskreten Aktivkohleteilchen, vorzugsweise in Kornform oder Kugelform, besteht, haben diese im allgemeinen mittlere Durchmesser von weniger als 1,0 mm, vorzugsweise von höchstens 0,8 mm, bevorzugt von höchstens 0,6 mm, wobei der mittlere Durchmesser jedoch mindestens 0,1 mm betragen sollte. Im Falle von Aktivkohlefasern können diese insbesondere in Form eines Aktivkohlefaserflächengebildes vorliegen, wobei das Aktivkohlefaserflächengebilde insbesondere ein Flächengewicht von 10 bis 300 g/m², insbesondere 20 bis 200 g/m², vorzugsweise 30 bis 150 g/m², aufweisen sollte (z. B. Aktivkohlefasergewebe, -gewirke, -gelege oder -verbundstoffe, insbesondere auf Basis von carbonisierter und aktivierte Cellulose und/oder auf Basis eines carbonisierten aktivierten Acrylnitrils).

Aufgrund des zuvor beschriebenen, speziellen Aufbaus des erfindungsgemäβen funktionellen Textilmaterials 1, insbesondere infolge des diskontinuierlichen Klebstoffauftrags, ist das Gesamtflächengewicht des funktionellen Textilmaterials 1 nach der vorliegenden Erfindung relativ gering; im allgemeinen weist das funktionelle Textilmaterial 1 nach der vorliegenden Erfindung ein Gesamtflächengewicht von 75 bis 1.000 g/m², insbesondere 100 bis 800 g/m², vorzugsweise 125 bis 500 g/m², auf.

Wie zuvor beschrieben, ist das funktionelle Textilmaterial 1 vorzugsweise gasdurchlässig, insbesondere luftdurchlässig, ausgebildet. Infolge des nur diskontinuierlichen Klebstoffauftrags ist die Gas- bzw. Luftdurchlässigkeit deutlich erhöht. Im allgemeinen beträgt die Gas- bzw. Luftdurchlässigkeit des funktionellen Textilmaterials 1 mindestens 50 1·m⁻²·s⁻¹, insbesondere mindestens 100 1·m⁻²·s⁻¹ vorzugsweise mindestens 200 1·m⁻²·s⁻¹, besonders bevorzugt mindestens 500 l·m⁻²·s⁻¹, und kann bis zu 10.000 l·m⁻²·s⁻¹ betragen.

Aufgrund seiner speziellen Eigenschaften weist das funktionelle Textilmaterial 1 nach der vorliegenden Erfindung im allgemeinen auch eine gute Wasserdampfdurchgangsrate auf, insbesondere von mindestens 5 l/m² pro 24 h, insbesondere von mindestens 10 l/m² pro 24 h, vorzugsweise von mindestens 15 l/m² pro 24 h, besonders bevorzugt von mindestens 20 l/m² pro 24 h, ganz besonders bevorzugt von mindestens 25 l/m² pro 24 h.

Für spezielle Anwendungen, insbesondere für den Bereich des ABC-Schutzes, kann es jedoch erforderlich sein, das funktionelle Textilmaterial 1 nach der vorliegenden Erfindung gasundurchlässig, insbesondere luftundurchlässig, auszustatten. Für diesen Fall kann es vorteilhaft sein, daß das funktionelle Textilmaterial 1 nach der vorliegenden Erfindung außerdem mindestens eine Membran (in der Figur nicht dargestellt) aufweist. Bei einer solchen Membran kann es sich beispielsweise um eine so genannte Klimamembran handeln. Insbesondere handelt es sich jedoch bei einer solchen Membran um eine zumindest im wesentlichen wasser- und gasundurchlässige, aber wasserdampfdurchlässige Membran, welche den Durchtritt chemischer und/oder biologischer Gifte und Schadstoffe verzögert oder gegenüber chemischen und/oder biologischen Giften und Schadstoffen zumindest im wesentlichen undurchlässig ist. Solche Membranen sind dem Fachmann als solche bekannt, so daß diesbezüglich nicht näher darauf eingegangen werden zu braucht. Im allgemeinen werden derartige Membranen im Rahmen des erfindungsgemäßen funktionellen Textilmaterials 1 mit einer Dicke von 1 bis 500 µm, insbesondere 1 bis 250 µm, vorzugsweise 1 bis 100 µm, bevorzugt 1 bis 50 µm, eingesetzt.

Gegenstand der vorliegenden Erfindung - gemäß einem weiteren Aspekt der vorliegenden Erfindung - ist die Verwendung eines wie zuvor beschriebenen funktionellen Textilmaterials nach der vorliegenden Erfindung zur Herstellung von Bekleidung sowie von Schutzmaterialien aller Art, insbesondere von Schutzanzügen, Schutzhandschuhen, Schutzschuhwerk, Schutzsocken, Knopfschutzbekleidung und anderen Schutzbekleidungsstücken und von Schutzabdeckungen und Schlafsäcken, insbesondere für zivile und militärische Zwekke, vorzugsweise für den ABC-Einsatz.

Gegenstand der vorliegenden Erfindung ist - gemäß einem wiederum weiteren Aspekt der vorliegenden Erfindung - gleichermaßen ein unter Verwendung des erfindungsgemäßen funktionellen Textilmaterials hergestelltes Bekleidungsstück bzw. ein Bekleidungsstück, welches ein funktionelles Textilmaterial nach der vorliegenden Erfindung aufweist. Ebenfalls Gegenstand der vorliegenden Erfindung sind Schutzmaterialien aller Art, insbesondere Schutzanzüge, Schutzhandschuhe, Schutzschuhwerk, Schutzsocken, Kopfschutzbekleidung und andere Schutzbekleidungsstücke sowie Schutzabdekkungen und Schlafsäcke, insbesondere für zivile und militärische Zwecke, vorzugsweise für den ABC-Einsatz, welche unter Verwendung eines funktionellen Textilmaterials nach der vorliegenden Erfindung hergestellt sind bzw. welche ein funktionelles Textilmaterial nach der vorliegenden Erfindung aufweisen.

Weiterer Gegenstand der vorliegenden Erfindung gemäß einem wiederum weiteren Aspekt der vorliegenden Erfindung ist die Verwendung eines funktionellen Textilmaterials nach der vorliegenden Erfindung zur Herstellung von Filtern und Filtermaterialien aller Art, insbesondere von Filtern und Filtermaterialien zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Schließlich sind weiterer Gegenstand der vorliegenden Erfindung Filter und Filtermaterialien aller Art, insbesondere Filter und Filtermaterialien zur Engtfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung eines funktionellen Textilmaterials nach der vorliegenden Erfindung hergestellt sind bzw. welche ein funktionelles Textilmaterial nach der vorliegenden Erfindung aufweisen.

Mit der vorliegenden Erfindung sind eine Vielzahl von Vorteilen verbunden, wie sie zuvor eingehend geschildert worden sind. Insbesondere ermöglicht die besondere Ausgestaltung des erfindungsgemäßen funktionellen Textilmaterials die Erreichung einer hohen Luftdurchlässigkeit und damit eines hohen Tragekomforts bei gleichzeitig zuverlässiger Fixierung der Mikrokapseln an dem funktionellen Textilmaterial. Das Textilmaterial behält durch den diskontinuierlichen Klebstoffauftrag seine Flexibilität bei. Über Größe, Anordnungsmuster und Anzahl der aufgetragenen Klebstoffpunkte kann beispielsweise die Menge der verklebten Mikrokapseln gezielt gesteuert werden. Beispielsweise durch die Verwendung von sogenannten reaktiven Hotmelt-Klebstoffsystemen können die Mikrokapseln nahe Raumtemperatur aufgeklebt werden und müssen zur Reaktion des Klebstoffs keinen UV- oder anderen Strahlen ausgesetzt werden. Alternativ können, wie zuvor geschildert, auch thermoplastische Klebstoffsysteme eingesetzt werden. Das mit den wirkstoffhaltigen Mikrokapseln versehene funktionelle Textilmaterial nach der vorliegende Erfindung ermöglicht eine Vielzahl von Anwendungsmöglichkeiten, insbesondere die Weiterverarbeitung zu Textilmaterialien, insbesondere zu Bekleidung.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Funktionelles Textilmaterial (1), wobei das funktionelle Textilmaterial (1) einen textilen Träger (2) umfaßt, wobei der textile Träger (2) mit Mikrokapseln (3) beaufschlagt ist, wobei die Mikrokapseln (3) mindestens einen Wirkstoff enthalten, wobei die Mikrokapseln (3) mittels eines diskontinuierlich auf dem textilen Träger (2) applizierten Klebstoffs (4) an dem textilen Träger (2) befestigt sind, wobei die Mikrokapseln (3) als Wirkstoff ein Phasenumwandlungsmaterial (Phase-Change-Material) enthalten, wobei das Phasenumwandlungsmaterial ein Material mit fest/flüssig- oder flüssig/fest-Phasenübergang ist und wobei das Phasenumwandlungsmaterial beim Phasenübergang Wärme oder Kälte generiert,
**dadurch gekennzeichnet,**
**daß** die Verklebung der Mikrokapseln (3) mit dem textilen Träger (2) durch einen diskontinuierlichen Klebstoffauftrag in Form von nichtzusammenhängenden, räumlich voneinander beabstandeten Kleberpunkten (4) erfolgt, wobei der Abstand der einzelnen Kleberpunkte (4) voneinander höchstens dem 20fachen des Durchmessers der Kleberpunkte (4) entspricht und der Durchmesser der Kleberpunkte (4) höchstens dem 20fachen des Durchmessers der Mikrokapseln (3) entspricht, sofern der Durchmesser der Mikrokapseln (3) mindestens 50 µm beträgt, und wobei der Klebstoff (4) den textilen Träger (2) insgesamt zu höchstens 30 % bedeckt,
**daß** die Verklebung der Mikrokapseln (3) mit dem textilen Träger (2) mittels des Klebstoffs (4) erfolgt derart, daß mindestens 50 % der Oberfläche der Mikrokapseln (3) nicht mit Klebstoff (4) bedeckt ist, und
**daß** der textile Träger (2) außerdem ein chemische Gifte adsorbierendes Adsorbens auf Basis von Aktivkohle in Form von Aktivkohleteilchen und/oder Aktivkohlefasern umfaßt, wobei das Adsorbens an dem textilen Träger (2) mittels Verkleben befestigt ist.

2. Funktionelles Textilmaterial nach Anspruch 1, **dadurch gekennzeichnet, daß** die Mikrokapseln (3) auf ihrer dem textilen Träger (2) abgewandten Seite mit einer textilen Abdeckschicht (5) bedeckt sind.

3. Funktionelles Textilmaterial nach Anspruch 1 oder 2, **dadurch gekennzeichnet, daß** der textile Träger (2) ein textiles Flächengebilde ist.

4. Funktionelles Textilmaterial nach einem oder mehreren der vorangehenden Ansprüche, **dadurch gekennzeichnet, daß** der textile Träger (2) ein Gewebe, Gewirke, Gestricke, Gelege, Textilverbundstoff, Vlies oder Nonwoven ist.

5. Funktionelles Textilmaterial nach einem oder mehreren der vorangehenden Ansprüche, **dadurch gekennzeichnet, daß** der textile Träger (2) ein Flächengewicht von 25 bis 500 g/m² aufweist.

6. Funktionelles Textilmaterial nach einem oder mehreren der vorangehenden Ansprüche, **dadurch gekennzeichnet, daß** der Klebstoff (4) mit einem Flächengewicht (Trockengewicht) von 5 bis 30 g/m², auf den textilen Träger (2) aufgebracht ist und daß der Klebstoff (4) auf den textilen Träger (2) in Form eines regelmäßigen Rasters oder Musters oder aber in Form eines unregelmäßigen, insbesondere computerberechneten Rasters oder Musters aufgedruckt ist.

7. Funktionelles Textilmaterial nach einem oder mehreren der vorangehenden Ansprüche, **dadurch gekennzeichnet, daß** der Klebstoff (4) durch eine Schablone auf den textilen Träger (2) aufgedruckt ist, wobei der lichte Durchmesser der Löcher der Schablone für den Klebstoffauftrag 50 bis 1.000 µm beträgt.

8. Funktionelles Textilmaterial nach einem oder mehreren der vorangehenden Ansprüche, **dadurch gekennzeichnet, daß** die Mikrokapseln (3) einen Durchmesser von 1 µm bis 5 mm aufweisen.

9. Funktionelles Textilmaterial nach einem oder mehreren der vorangehenden Ansprüche, **dadurch gekennzeichnet, daß** die Mikrokapseln (3) in Form von Matrixkapseln oder in Form von Kern/Hülle-Kapseln vorliegen.

10. Funktionelles Textilmaterial nach einem oder mehreren der vorangehenden Ansprüche, **dadurch gekennzeichnet, daß** das Kapselmaterial der Mikrokapseln (3), insbesondere das Matrixmaterial im Fall von Matrixkapseln oder das Hüllmaterial im Fall von Kem/Hülle-Kapseln, auf Basis von organischen Polymeren, organisch-anorganischen Hybridpolymeren oder anorganischen Materialien, insbesondere anorganischen Oxiden, ausgebildet ist.

11. Funktionelles Textilmaterial nach einem oder mehreren der vorangehenden Ansprüche, **dadurch gekennzeichnet, daß** die Mikrokapseln (3) den Wirkstoff in Mengen von 1 bis 99 Gew.-%, insbesondere 5 bis 90 Gew.-%, bezogen auf die Mikrokapseln (3), enthalten.

12. Funktionelles Textilmaterial nach einem oder mehreren der vorangehenden Ansprüche, **dadurch gekennzeichnet, daß** das Phasenumwandlungsmaterial ausgewählt ist aus der Gruppe von Paraffinen, Hydratsalzen und Polyethylenglykol, vorzugsweise Paraffinen.

13. Funktionelles Textilmaterial nach einem oder mehreren der Ansprüche 2 bis 12, **dadurch gekennzeichnet, daß** die Abdeckschicht (5) ein geringeres Flächengewicht als der textile Träger (2) aufweist.

14. Funktionelles Textilmaterial nach einem oder mehreren der vorangehenden Ansprüche, **dadurch gekennzeichnet, daß** das funktionelle Textilmaterial (1) ein Gesamtflächengewicht von 75 bis 1.000 g/m² aufweist.

15. Funktionelles Textilmaterial nach einem oder mehreren der vorangehenden Ansprüche, **dadurch gekennzeichnet, daß** das funktionelle Textilmaterial (1) gasdurchlässig, insbesondere luftdurchlässig, ist, wobei die Gas- bzw. Luftdurchlässigkeit des funktionellen Textilmaterials (1) mindestens 50 l·m⁻²·s⁻¹ beträgt.

16. Funktionelles Textilmaterial nach einem oder mehreren der vorangehenden Ansprüche, **dadurch gekennzeichnet, daß** das funktionelle Textilmaterial (1) eine Wasserdampfdurchgangsrate von mindestens 5 l/m² pro 24 h aufweist.

17. Verwendung eines funktionellen Textilmaterials (1) nach einem der vorangehenden Ansprüche zur Herstellung von Bekleidung sowie Schutzmaterialien aller Art, insbesondere von Schutzanzügen, Schutzhandschuhen, Schutzschuhwerk, Schutzsocken, Kopfschutzbekleidung und anderen Schutzbekleidungsstücken und von Schutzabdeckungen und Schlafsäcken, für zivile und militärische Zwekke, vorzugsweise alle vorgenannten Schutzmaterialien für den ABC-Einsatz.

18. Verwendung eines funktionellen Textilmaterials (1) nach einem der vorangehenden Ansprüche zur Herstellung von Filtern und Filtermaterialien aller Art, insbesondere von Filtern und Filtermaterialien zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

19. Bekleidung, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

20. Schutzmaterialien aller Art, insbesondere Schutzanzüge, Schutzhandschuhe, Schutzschuhwerk, Schutzsocken, Kopfschutzbekleidung und andere Schutzbekleidungsstücke sowie Schutzabdeckungen und Schlafsäcke, insbesondere für zivile und militärische Zwecke, vorzugsweise für den ABC-Einsatz, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

21. Filter und Filtermaterialien aller Art, insbesondere Filter und Filtermaterialien zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung eines funktionellen Textilmaterials (1) nach einem der vorangehenden Ansprüche und/oder aufweisend ein funktionelles Textilmaterial (1) nach einem der vorangehenden Ansprüche.

## Claims

1. Functional textile material (1), the functional textile material (1) comprising a textile carrier (2), the textile carrier (2) having microcapsules (3) applied thereto, the microcapsules (3) containing at least one active component, the microcapsules (3) being secured to the textile carrier (2) by means of an adhesive (4) applied discontinuously on the textile carrier (2), the microcapsules (3) containing as active component a phase change material, the phase change material being a material having a solid-liquid or liquid-solid phase transition and the phase change material generating heat or cold in the course of phase transition,
**characterized in**
**that** the adhering of the microcapsules (3) to the textile carrier (2) is effected by a discontinuous application of adhesive in the form of noncoherent, spaced-apart adhesive dots (4), the distance between the individual adhesive dots (4) being not more than 20 times the diameter of the adhesive dots (4) and the diameter of the adhesive dots (4) being not more than 20 times the diameter of the microcapsules (3) when the diameter of the microcapsules (3) is at least 50 µm, and the adhesive (4) covering the textile carrier (2) altogether to an extent of not more than 30 %,
**that** the adhering of the microcapsules (3) to the textile carrier (2) is effected by means of the adhesive (4) such that at least 50 % of the surface of the microcapsules (3) is not covered with adhesive (4), and
**that** the textile carrier (2) further comprises an activated carbon adsorbent in the form of activated carbon particles and/or activated carbon fibres which adsorbs chemical poisons, the adsorbent being secured to the textile carrier (2) by means of adhesive.

2. Functional textile material according to Claim 1, **characterized in that** the microcapsules (3) are covered with a textile covering layer (5) on that side of theirs which is distal from the textile carrier (2).

3. Functional textile material according to Claim 1 or 2, **characterized in that** the textile carrier (2) is a textile fabric.

4. Functional textile material according to one or more of the preceding claims, **characterized in that** the textile carrier (2) is a woven, knitted, laid scrim, bonded, batt or nonwoven fabric.

5. Functional textile material according to one or more of the preceding claims, **characterized in that** the textile carrier (2) has a basis weight of 25 to 500 g/m².

6. Functional textile material according to one or more of the preceding claims, **characterized in that** the adhesive (4) is applied to the textile carrier (2) at a basis weight (dry weight) of 5 to 30 g/m² and **in that** the adhesive (4) is printed on the textile carrier (2) in the form of a regular grid or pattern or else in the form of an irregular, in particular computer-calculated grid or pattern.

7. Functional textile material according to one or more of the preceding claims, **characterized in that** the adhesive (4) is printed on the textile carrier (2) through a screen, the clear diameter of the holes in the screen for the application of adhesive being 50 to 1000 µm.

8. Functional textile material according to one or more of the preceding claims, **characterized in that** the microcapsules (3) have a diameter of 1 µm to 5 mm.

9. Functional textile material according to one or more of the preceding claims, **characterized in that** the microcapsules (3) are present in the form of matrix capsules or in the form of core-sheath capsules.

10. Functional textile material according to one or more of the preceding claims, **characterized in that** the capsule material of the microcapsules (3), in particular the matrix material in the case of matrix capsules or the sheath material in the case of core-sheath capsules, is based on organic polymers, organic-inorganic hybrid polymers or inorganic materials, in particular inorganic oxides.

11. Functional textile material according to one or more of the preceding claims, **characterized in that** the microcapsules (3) contain the active component in amounts of 1 % to 99 % by weight, in particular 5 % to 90 % by weight, based on the microcapsules (3).

12. Functional textile material according to one or more of the preceding claims, **characterized in that** the phase change material is selected from the group of paraffins, hydrate salts and polyethylene glycol, preferably paraffins.

13. Functional textile material according to one or more of Claims 2 to 12, **characterized in that** the covering layer (5) has a lower basis weight than the textile carrier (2).

14. Functional textile material according to one or more of the preceding claims, **characterized in that** the functional textile material (1) has an overall basis weight of 75 to 1000 g/m².

15. Functional textile material according to one or more of the preceding claims, **characterized in that** the functional textile material (1) is gas permeable, in particular air permeable, the gas or air transmission rate of the functional textile material (1) being at least 50 l·m⁻²·s⁻¹.

16. Functional textile material according to one or more of the preceding claims, **characterized in that** the functional textile material (1) has a water vapour transmission rate of at least 5 l/m² per 24 h.

17. Use of a functional textile material (1) according to one or more of the preceding claims in the manufacture of apparel and also protective materials of any kind, in particular of protective suits, protective gloves, protective footwear, protective socks, head-protective apparel and other protective apparel pieces and of protective coverings and sleeping bags, for civil and military purposes, preferably all aforementioned protective materials for NBC deployment.

18. Use of a functional textile material (1) according to one or more of the preceding claims in the manufacture of filters and filter materials of any kind, in particular of filters and filter materials for removing noxiant, odorant and toxicant materials of any kind, in particular from air and/or gas streams, such as NBC protective mask filters, odour filters, area filters, air filters, in particular filters for indoor air cleaning, adsorption-capable carrier structures and filters for the medical sector.

19. Apparel obtained using a functional textile material (1) according to any one of the preceding claims and/or including a functional textile material (1) according to any one of the preceding claims.

20. Protective materials of any kind, in particular protective suits, protective gloves, protective footwear, protective socks, head-protective apparel and other protective apparel pieces and protective coverings and sleeping bags, in particular for civil and military purposes, preferably for NBC deployment, obtained using a functional textile material (1) according to any one of the preceding claims and/or including a functional textile material (1) according to any one of the preceding claims.

21. Filter and filter materials of any kind, in particular filter and filter materials for removing noxiant, odorant and toxicant materials of any kind, in particular from air and/or gas streams, such as NBC protective mask filters, odour filters, area filters, air filters, in particular filters for indoor air cleaning, adsorption-capable carrier structures and filters for the medical sector, obtained using a functional textile material (1) according to any one of the preceding claims and/or including a functional textile material (1) according to any one of the preceding claims.

## Revendications

1. Tissu fonctionnel (1), ledit tissu fonctionnel (1) comprenant un support textile (2), le support textile (2) étant pourvu de microcapsules (3), les microcapsules (3) contenant au moins un principe actif, les microcapsules (3) étant fixées sur le support textile (2) au moyen d'une colle (4) appliquée de manière discontinue sur le support textile (2), les microcapsules (3) contenant comme principe actif une matière à transformation de phase (phase change material), la matière à transformation de phase étant une matière à transition de phase solide/liquide ou liquide/solide et la matière à transformation de phase générant de la chaleur ou du froid lors de la transition de phase,
**caractérisé en ce que**
le collage des microcapsules (3) au support textile (2) est réalisé par application discontinue de colle sous forme de points de colle (4) non liés et espacés mutuellement dans l'espace, la distance entre les points de colle distincts (4) équivalant au plus à 20 fois le diamètre des points de colle (4) et le diamètre des points de colle (4) équivalant au plus à 20 fois le diamètre des microcapsules (3) dans la mesure où le diamètre des microcapsules (3) est d'au moins 50 µm et la colle (4) recouvrant globalement le support textile (2) au plus à 30 %,
le collage des microcapsules (3) au support textile (2) au moyen de la colle (4) est réalisé de manière à ce qu'au moins 50 % de la surface des microcapsules (3) ne soit pas recouverte de colle (4) et
le support textile (2) comporte en outre un agent adsorbant à base de charbon actif sous forme de particules de charbon actif et/ou de fibres de charbon actif qui adsorbe les substances toxiques, l'agent adsorbant étant fixé par collage sur le support textile (2).

2. Tissu fonctionnel selon la revendication 1, **caractérisé en ce que** les microcapsules (3) sont recouvertes sur leur côté détourné du support textile (2) d'une couche de recouvrement textile (5).

3. Tissu fonctionnel selon la revendication 1 ou 2, **caractérisé en ce que** le support textile (2) est une structure surfacique textile.

4. Tissu fonctionnel selon l'une quelconque ou plusieurs des revendications précédentes, **caractérisé en ce que** le support textile (2) est un tissu, un tissu à mailles, un tissu tricoté, une nappe, un composite textile, un filé-lié ou un non-tissé.

5. Tissu fonctionnel selon l'une quelconque ou plusieurs des revendications précédentes, **caractérisé en ce que** le support textile (2) a un grammage de 25 à 500 g/m².

6. Tissu fonctionnel selon l'une quelconque ou plusieurs des revendications précédentes, **caractérisé en ce que** la colle (4) est appliquée en un grammage (poids sec) de 5 à 30 g/m² sur le support textile (2) et que la colle (4) est imprimée sur le support textile (2) en forme de trame ou de motif régulier ou même en forme de trame ou de motif irrégulier calculé en particulier par ordinateur.

7. Tissu fonctionnel selon l'une quelconque ou plusieurs des revendications précédentes, **caractérisé en ce que** la colle (4) est imprimée à l'aide d'un cadre sur le support textile (2), le diamètre intérieur des trous du cadre servant à l'application de colle étant compris entre 50 et 1 000 µm.

8. Tissu fonctionnel selon l'une quelconque ou plusieurs des revendications précédentes, **caractérisé en ce que** les microcapsules (3) ont un diamètre compris entre 1 µm et 5 mm.

9. Tissu fonctionnel selon l'une quelconque ou plusieurs des revendications précédentes, **caractérisé en ce que** les microcapsules (3) se présentent sous forme de capsules matricielles ou sous forme de capsules à noyau/enveloppe.

10. Tissu fonctionnel selon l'une quelconque ou plusieurs des revendications précédentes, **caractérisé en ce que** la matière des microcapsules (3), notamment la matière matricielle dans le cas de capsules matricielles ou la matière de l'enveloppe dans le cas de capsules à noyau/enveloppe est à base de polymères organiques, de polymères hybrides organiques-inorganiques ou de matériaux inorganiques, notamment d'oxydes inorganiques.

11. Tissu fonctionnel selon l'une quelconque ou plusieurs des revendications précédentes, **caractérisé en ce que** les microcapsules (3) contiennent le principe actif en quantités de 1 à 99 % en poids, notamment 5 à 90 % en poids, par rapport aux microcapsules (3).

12. Tissu fonctionnel selon l'une quelconque ou plusieurs des revendications précédentes, **caractérisé en ce que** la matière à transformation de phase est sélectionnée parmi le groupe constitué des paraffines, des sels hydratés et du polyéthylèneglycol, de préférence des paraffines.

13. Tissu fonctionnel selon l'une quelconque ou plusieurs des revendications 2 à 12, **caractérisé en ce que** la couche de recouvrement (5) présente un grammage plus faible que le support textile (2).

14. Tissu fonctionnel selon l'une quelconque ou plusieurs des revendications précédentes, **caractérisé en ce que** le tissu fonctionnel (1) présente un grammage compris entre 75 et 1 000 g/m².

15. Tissu fonctionnel selon l'une quelconque ou plusieurs des revendications précédentes, **caractérisé en ce que** le tissu fonctionnel (1) est perméable au gaz, notamment perméable à l'air, la perméabilité au gaz ou à l'air du tissu fonctionnel (1) étant d'au moins 50 l-m-²· s⁻¹.

16. Tissu fonctionnel selon l'une quelconque ou plusieurs des revendications précédentes, **caractérisé en ce que** le tissu fonctionnel (1) présente un taux de perméabilité à la vapeur d'eau d'au moins 5 l/m² par période de 24 heures.

17. Utilisation d'un tissu fonctionnel (1) selon l'une quelconque des revendications précédentes pour la fabrication de vêtements ainsi que d'équipements de protection de tous genres, notamment d'ensembles de protection, de gants de protection, de chaussures de protection, de chaussettes de protection, de chapeaux de protection et d'autres vêtements de protection et de recouvrements de protection et de sacs de couchage destinés à des fins civiles et militaires, tous les équipements de protection précités étant destinés de préférence à une utilisation NBC.

18. Utilisation d'un tissu fonctionnel (1) selon l'une quelconque des revendications précédentes pour la fabrication de filtres et matériaux filtrants de tous genres, notamment de filtres et de matériaux filtrants servant à éliminer des substances polluantes, odorantes et toxiques de tous genres notamment de courants d'air et/ou de gaz, comme de filtres de masques de protection NBC, de filtres à odeurs, de filtres surfaciques, de filtres à air, notamment de filtres de purification d'air ambiant, de structures porteuses aptes à l'adsorption et de filtres destinés au secteur médical.

19. Vêtements fabriqués en utilisant un tissu fonctionnel (1) selon l'une quelconque des revendications précédentes et/ou comportant un tissu fonctionnel (1) selon l'une quelconque des revendications précédentes.

20. Equipements de protection de tous genres, notamment ensembles de protection, gants de protection, chaussures de protection, chaussettes de protection, chapeaux de protection et autres vêtements de protection ainsi que recouvrements de protection et sacs de couchage notamment destinés à des fins civiles et militaires, destinés de préférence à une utilisation NBC, fabriqués en utilisant un tissu fonctionnel (1) selon l'une quelconque des revendications précédentes et/ou comportant un tissu fonctionnel (1) selon l'une quelconque des revendications précédentes.

21. Filtres et matériaux filtrants de tous genres, notamment filtres et matériaux filtrants servant à éliminer des substances polluantes, odorantes et toxiques de tous genres notamment de courants d'air et/ou de gaz, comme filtres de masques de protection NBC, filtres à odeurs, filtres surfaciques, filtres à air, notamment filtres de purification d'air ambiant, structures porteuses aptes à l'adsorption et filtres destinés au secteur médical, fabriqués en utilisant un tissu fonctionnel (1) selon l'une quelconque des revendications précédentes et/ou comportant un tissu fonctionnel (1) selon l'une quelconque des revendications précédentes.
